# EUROPÄISCHE PATENTSCHRIFT

(11) **EP 1 960 130 B1**
(45) Veröffentlichungstag und Bekanntmachung des Hinweises auf die Patenterteilung: **11.08.2010**
(21) Anmeldenummer: 06804847.9
(22) Anmeldetag: 01.11.2006
(51) Int. Cl.: B09C 1/02, C11D 11/00, C11D 3/20, C11D 1/40, C11D 1/72, C11D 3/43, C11D 3/12, C09K 8/60

(54) **MITTEL ZUR BEHANDLUNG VON ÖLKONTAMINIERTEM ERDREICH UND ZUR REINIGUNG VON ÖLVERSCHMUTZTEN OBERFLÄCHEN UND BEHÄLTNISSEN**
AGENT FOR TREATING OIL-POLLUTED GROUND AND FOR CLEANING OIL-CONTAMINATED SURFACES AND CONTAINERS
AGENT POUR LE TRAITEMENT D'UNE TERRE CONTAMINEE PAR DU PETROLE AINSI QUE LE NETTOYAGE DE SURFACES ET DE RESERVOIRS POLLUES PAR DU PETROLE

(30) Priorität: 07.11.2005 CH 17792005; 08.11.2005 WO PCT/CH2005/000658; 15.09.2006 CH 14732006; 15.09.2006 CH 14742006
(43) Veröffentlichungstag der Anmeldung: 27.08.2008
(73) Patentinhaber: SWISSTECH HOLDING AG, 6300 Zug (CH)
(72) Erfinder: KROH, Werner, CH-3077 Enggistein (CH)
(74) Vertreter: Rentsch & Partner
(86) Internationale Anmeldenummer: PCT/CH2006/000613
(87) Internationale Veröffentlichungsnummer: WO 2007/051337

(56) Entgegenhaltungen:
- WO-A2-01/76782
- DE-A1- 19 716 953
- US-A- 5 833 756
- US-A1- 2002 187 545
- GROHS H: "DIE AUFBEREITUNGSTECHNIK DES BODENWASCHENS" AUFBEREITUNGS TECHNIK, VERLAG FUER AUFBEREITUNG, WIESBADEN, DE, Bd. 31, Nr. 12, 1. Dezember 1990 (1990-12-01), Seiten 656-662, XP000169120 ISSN: 0004-783X
- DESHPANDE S ET AL: "Surfactant selection for enhancing ex situ soil washing" WATER RESEARCH, ELSEVIER, AMSTERDAM, NL, Bd. 33, Nr. 2, Februar 1999 (1999-02), Seiten 351-360, XP004144653 ISSN: 0043-1354

## Beschreibung

### FELD DER ERFINDUNG

Die Erfindung betrifft ein Konzentrat zur Herstellung einer Reinigungslösung zur Behandlung von ölkontaminiertem Erdreich und zur Reinigung von ölverschmutzten Oberflächen, eine aus dem Konzentrat hergestellte Reinigungslösung, ein Verfahren zur Behandlung von ölkontaminiertem Erdreich mit der Reinigungslösung, sowie ein Verfahren zur Reinigung von ölverschmutzten Oberflächen mit der Reinigungslösung.

### HINTERGRUND DER ERFINDUNG

Beim Transport von Mineralölen, insbesondere von Rohöl, kommt es immer wieder zu schwerwiegenden Verunreinigungen der Umwelt durch austretendes Öl. Solche Vorfälle können grössere Ausmasse haben, beispielsweise geborstene oder undichte Transportpipelines, aber auch kleinere Vorkommnisse wie austretender Treibstoff nach Unfällen sind problematisch.

Während es für die Entfernung von Ölverschmutzungen von Wasseroberflächen verschiedene bewährte Verfahren gibt, beispielsweise schwimmfähige Ölbindemittel, ist die Reinigung von ölkontaminiertem Erdreich sehr schwierig. Ein mechanisches Entfernen des verschmutzen Bodens und dessen anschliessende Entsorgung ist bereits für kleinere Verschmutzungen sehr kostspielig und aufwendig, und bei grösseren Mengen finanziell und logistisch unmöglich. Ebenfalls problematisch ist die Reinigung von ölverschmutzten Oberflächen, beispielsweise an ölverschmutzten Felsküsten und Stränden, aber auch im Inneren von Öltanks. Eine Entfernung der Ölrückstände mit Wasser, z.B. mit einem Hochdruckreiniger, kann dazu führen, dass die Verschmutzung einfach an einen anderen Ort verfrachtet wird. Eine mechanische Reinigung der Oberflächen andererseits ist sehr aufwendig. Bedauerlicherweise ist es zudem eine immer noch weit verbreitete Praxis, solche Treibstoff und Transporttanks von Hochseeschiffen zur Reinigung mit Meerwasser auszuspülen, und die entstehenden Ölrückstände einfach im Meer zu entsorgen.

### DARSTELLUNG DER ERFINDUNG

Aufgabe der Erfindung ist es, ein Konzentrat zur Herstellung einer Reinigungslösung und eine Reinigungslösung zur Verfügung zu stellen, welche eine effiziente und trotzdem möglichst umweltschonende Behandlung ölkontaminierter Böden und eine effiziente und trotzdem möglichst umweltschonende Reinigung ölverschmutzter Oberflächen erlaubt. Ebenso ist es eine Aufgabe der Erfindung, neue und vorteilhafte Verfahren zur Behandlung ölkontaminierter Böden und Reinigung ölverschmutzter Oberflächen zur Verfügung zu stellen, die die Nachteile der bekannten Verfahren nicht aufweisen.

Diese und andere Aufgaben werden gelöst durch ein erfindungsgemässes Konzentrat, eine Reinigungslösung hergestellt aus einem erfindungsgemässen Konzentrat, sowie erfindungsgemässen Verfahren, gemäss den unabhängigen Ansprüchen. Weitere bevorzugte Ausführungsformen sind in den abhängigen Ansprüche gegeben.

Ein erfindungsgemässes Konzentrat zur Behandlung von ölkontaminiertem Erdreich und zur Reinigung von ölverschmutzten Oberflächen besteht aus einem Emulgator, einem pflanzlichen Öl und einem Lösungsvermittler. Beim Emulgator handelt es sich um ein nicht-ionisches Tensid mit einem HLB-Wert zwischen 7 und 8. Das pflanzliche Öl ist vorteilhaft so gewählt, dass es bei Temperaturen ab über 5°C, vorzugsweise ab 10°C flüssig ist. Besonders geeignet sind Öle mit einem erhöhten Gehalt an ungesättigten Fettsäuren. Beim Lösungsvermittler handelt es sich vorteilhafter Weise um Ethanol oder Isopropanol, aber auch andere niedermolekulare Alkohole oder Glykolether können verwendet werden. Ein erfindungsgemässes Konzentrat ist homogen, klar, und frei von Wasser, Es ist lange haltbar, und kann gefahrlos transportiert und gelagert werden. Zum Lagern und Transport wird das erfindungsgemässe Konzentrat vorzugsweise noch mit der zweifachen Menge Wasser zu einer Vorlösung formuliert.

Zur Anwendung für die Behandlung von festen Gegenständen wie Felsen, Klippen oder Infrastruktur wie Wänden, Mauern oder Dämmen wird ein erfindungsgemässes Konzentrat oder eine Vorlösung mit Wasser zu einer gebrauchsfertigen Reinigungslösung verdünnt und auf die zu behandelnden ölverschmutzten Oberflächen aufgebracht, vorzugsweise aufgesprüht oder die Oberfläche wird mit der Reinigungslösung abgewaschen. Das Öl wird in der erfindungsgemässen Reinigungslösung emulgiert und so von den Oberflächen gelöst. Im emulgiertem fein verteilten Zustand ist das Öl wesentlich leichter biologisch durch Mikroorganismen und auch chemisch abbaubar. In tiefer liegenden Bodenschichten bindet sich das fein dispergierte Öl an vorhandene Boden-Mineralteilchen, wo es adsorbiert vorliegt und später abgebaut wird. Das Öl gelangt so nicht in das Grundwasser. Die Anwesenheit eines pflanzlichen Öls bietet zudem ölabbauenden Mikroorganismen einen vorteilhaften Nährsubstrat. Da die Ölrückstände vor Ort abgebaut werden, ist ein aufwendiges Entsorgen des kontaminierten Erdreichs nicht mehr nötig.

Es ist auch möglich die Reinigungslösung während dem Ausbringen herzustellen, zum Beispiel durch kontinuierliches Beimischen des erfindungsgemässen Konzentrats oder der Vorlösung zu Wasser, beispielsweise in einem Hochdruckreiniger.

Besonders geeignet ist ein erfindungsgemässes Konzentrat zur Reinigung von ölverschmutztem Gestein an Stränden, wo eine mechanische Reinigung nicht praktikabel ist, und eine blosse Entfernung der Ölrückstande mit Wasser lediglich zu einer Verfrachtung in das Erdreich oder in Gewässer führen würde. Ebenfalls vorteilhaft ist eine Verwendung einer mittels des erfindungsgemässen Konzentrates hergestellten Reinigungslösung zur Reinigung von Öltanks, insbesondere auf Hochseeschiffen.

In einer besonders vorteilhaften Variante eines erfindungsgemässen Reinigungsverfahrens wird der bei der Reinigung der Tankinnenwände mit einer erfindungsgemässen Reinigungslösung anfallenden Emulsion aus Öl und Reinigungslösung ein pulverförmiges Adsorptionsmittel zugefügt, welches das emulgierte Öl absorbiert. Die Eigenschaften des Adsorptionsmittels sind dabei so gewählt, dass die spezifische Dichte des Adsorptionsmittels grösser ist als die von Wasser, so dass das gebundene Öl mit dem Adsorptionsmittel sedimentiert. Die Pulverpartikel binden die Ölteilchen durch Adsorption, indem sie sich um die Öltröpfchen herum anordnen. Durch das höhere spezifische Gewicht des erfindungsgemässen Pulvers, das vorzugsweise zwischen 2.5 und 3.5, besonders bevorzugt um 3.0 liegt, sinken die Teile des Öl-Pulverkomplexes vollständig zum Grund des jeweiligen Gebindes oder Gewässers. Die vorliegende Erfindung nutzt die Physisorption, eine spezielle Form der Adsorption, bei der das Sorptiv durch physikalische Kräfte und nicht durch die Ausbildung von chemischen Bindungen an das Sorbens gebunden wird. Die hier wirkenden physikalischen Kräfte sind in der Regel ungerichtet und besitzen den Vorteil, dass die Bindungen reversibel sind. Das Sorptiv kann also wieder vom Sorbens abgegeben werden, was einen mikrobiellen Abbau des Öls unterstützt. Das Adsorptionsmittel mit einem spezifischen Gewicht von etwa 2.4 bis knapp über 3 g/cm³, ist eine Zusammensetzung verschiedener Gesteine beziehungsweise natürlich vorkommender Mineralien in Pulverform. Eine essentielle Hauptkomponente der erfindungsgemässen Zusammensetzung ist aus der folgenden Gruppe gewählt: Granitmehl, Quarzmehl, Kieselkalkmehl, Marmormehl und Gemische davon. Die Korngrösse der einzelnen Bestandteile oder Komponenten der erfindungsgemässen Zusammensetzung liegt vorzugsweise zwischen 80 bis 600, vorzugsweise unter 350 Mikrometer. Gemäss bevorzugter Ausführungsformen liegen mehr als 50 % oder bevorzugt 100 % der Partikel im Grössenbereich unterhalb 350 Mikrometer liegen.

Nach Zugabe des Adsorptionsmittel und Sedimentieren des Öls enthält die verbleibende überstehende Lösung praktisch kein Öl mehr, und kann problemlos direkt oder mit Wasser verdünnt in die Umgebung abgegeben werden, wo der Emulgator biologisch abgebaut wird. Das ölhaltige Sediment kann einer in Situ Biodegradation zugeführt werden, oder gesammelt und umweltgerecht entsorgt werden.

### DETAILLIERTE BESCHREIBUNG BEVORZUGTER AUSFÜHRUNGSFORMEN

Als Emulgatoren in einem erfindungsgemässen Konzentrat besonders geeignet sind nichtionische Tenside, insbesondere Polyethylenglykole und Ölsäureester von ethoxyliertem Rhizinusöl, beispielsweise Rhizinusöl-PEG 18-Dioleat (PEG 18 castor oil dioleate). Das letztere Produkt wird beispielsweise unter dem Handelsnamen MARLOWET LVS^{®} von der Firma SASOL Germany GmbH, D45764 Marl als Rohstoff für Kosmetika vertrieben, und hat bei Raumtemperatur eine spezifische Dichte von 0.9 g/cm³. Der Emulgator kann auch ein Gemisch aus mehreren geeigneten Substanzen sein.

Der Emulgator weist einen HLB-Wert zwischen 7 und 8 auf, besonders bevorzugt einen HLB-Wert von 7.5. Der HLB-Wert (hydrophilic lipophilic balance) bezeichnet dabei eine empirische Kennzahl, welche die Anteile hydrophiler und lipophiler Gruppen in einem Molekül beschreiben.

Die für die Herstellung eines erfindungsgemässen Konzentrats verwendeten pflanzlichen öle sind vorteilhafter Weise bei den üblichen Umgebungstemperaturen flüssig. Besonderes geeignet sind beispielsweise Öle mit einem relativ hohen Gehalt an ungesättigten Fettsäuren, insbesondere Keimöle, wie Weizenkeimöl oder Maiskeimöl.

Allen verwendeten Substanzen ist eigen, dass sie vorzugsweise toxikologisch möglichst unbedenklich und schnell biologisch abbaubar sind.

Nachfolgend werden einige beispielhafte Formulierungen von erfindungsgemässen Konzentraten und den entsprechenden Reinigungslösungen erläutert.

### A. Anwendungsbeispiel 1

Ein Konzentrat 1 gemäss einer ersten Ausführungsform der Erfindung besteht aus:

| | |
|---|---|
| 12.5 | vol % Rhizinusöl-PEG 18-Dioleat, |
| 12.5 | vol % Maiskeimöl und |
| 75 | vo.l% Ethanol. |

In einer alternativen vorteilhaften Formulierung kann das Konzentrat 1 auch Isopropanol anstatt Ethanol aufweisen:

| | |
|---|---|
| 12.5 | vol % Rhizinusöl-PEG 18-Dioleat, |
| 12.5 | vol % Maiskeimöl und |
| 75 | vol.% Isopropanol. |

Das Konzentrat 1 kann zur Herstellung einer Vorlösung 1 benutzt werden, die sich ebenfalls als geeignet für Lagerung und Transport erwiesen hat. Zur Herstellung eines Liters Vorlösung 1 werden 320 ml Konzentrat 1 (bestehend aus 40 ml Rhizinusöl-PEG 18-Dioleat, 40 ml Maiskeimöl und 240 ml Ethanol oder Isopropanol) mit 680 ml Wasser emulgiert.

Für die Behandlung von ölkontaminiertem Erdreich wird diese Vorlösung vorzugsweise mit der 150- bis 250-fachen Menge Wasser, vorzugsweise der 200-fachen Menge Wasser zur gebrauchsfertigen Reinigungslösung 1 verdünnt und diese Reinigungslösung auf das zu behandelnde Erdreich aufgebracht, beziehungsweise auf die zu reinigende Oberfläche aufgesprüht.

Für die Behandlung des Erdreichs bzw. zur Behandlung einer Oberfläche wird das Konzentrat oder die Vorlösung mit Wasser zur einsatzfähigen Reinigungslösung verdünnt und auf das zu behandelnde Erdreich aufgebracht, bzw. auf die zu reinigende Oberfläche aufgesprüht. Vorzugsweise werden pro Kilogramm vorhandenes Rohöl / raffiniertes Öl (typisches spez. Gewicht < 0.85 g/cm³) 0.24 bis 0.25 Liter Konzentrat 1 oder 0.75 Liter der Vorlösung 1 mit Wasser zu 150 Litern Reinigungslösung 1 verdünnt.

Für Schweröl (typisches spez. Gewicht > 0.85 g/cm³), welches wesentlich zähflüssiger ist, muss die Menge des erfindungsgemässen Konzentrats gegebenenfalls um 20 bis 70% erhöht werden. Vorteilhaft werden 0.3 Liter Konzentrat 1 oder 1 Liter Vorlösung 1 mit Wasser zu 150 Litern Reinigungslösung verdünnt. Gegebenenfalls kann die Menge an Reinigungslösung pro Kilogramm Öl auf 200 Liter erhöht werden.

Für einen Quadratmeter Boden, welcher zum Beispiel mit 3 kg Rohöl mit einem spez. Gewicht > 0.85 g/cm³ kontaminiert ist, werden also zum Beispiel 450 Liter Reinigungslösung 1, enthaltend 0.72 Liter des Konzentrats 1 beziehungsweise 2.25 Liter der

### B. Anwendungsbeispiel 2

Ein weiteres erfindungsgemässes Konzentrat 2 enthält:
17 Vol.% Rhizinusöl-PEG 18-Dioleat,
17 Vol% Maiskeimöl und
66 Vol.% Ethanol.

Alternativ kann das Konzentrat 2 wiederum auch mit Isopropanol anstatt Ethanol formuliert werden:
17 Vol.% Rhizinusöl-PEG 18-Dioleat,
17 Vol.% Maiskeimöl und
66 Vol.% Isopropanol.

Dieses Konzentrat 2 kann vor der Anwendung wiederum mit annähernd dem doppelten Volumen Wasser zur Vorlösung 2 verdünnt werden. Um einen Liter Vorlösung 2 herzustellen werden zum Beispiel 320 ml Konzentrat 2 mit 680 ml Wasser ersetzt. Vor der Behandlung wird die Vorlösung 2 wiederum mit der 150- bis 250-fachen Menge Wasser, vorzugsweise der 200-fachen Menge Wasser, zur gebrauchsfertigen Reinigungslösung 2 verdünnt. Diese Reinigungslösung wird auf zu behandelnde feste Gegenstände, Hafenstrukturen, Wände, Felsen und/oder Klippen aufgetragen, bzw. auf die zu reinigende Oberfläche aufgesprüht.

Für die Reinigung einer Oberfläche werden pro Kilogramm Rohöl / raffiniertes Öl (typisches spez. Gewicht < 0.85 g/cm³) 160 ml des Konzentrats 2 mit Wasser zu 150 Liter Reinigungslösung 2 verdünnt.

Vorzugsweise wird zur Verdünnung der erfindungsgemässen Konzentrate und Vorlösungen Süsswasser verwendet.

### C. Anwendungsbeispiel 3

Für die Reinigung eines Tanks von 2.5 m³, an dessen Innenwänden 6 kg Rohöl haften, werden 900 Liter Reinigungslösung 2, enthaltend 3 Liter Vorlösung 2, respektive 0.96 Liter Konzentrats 2, benötigt. Die Emulsion aus Rohöl und Reinigungslösung 2 wird anschliessend in einen separaten Tank umgepumpt, und zwischen 36 und 60 kg, vorzugsweise 48 kg eines Adsorptionsmittels, auf das im Folgenden noch genauer eingegangen wird, werden beigefügt.

Dieses Adsorptionsmittel bindet das emulgierte Öl und bringt es zum Absinken. Die verbleibende Restlösung, die praktisch kein Öl mehr enthält, kann anschliessend direkt oder mit Wasser verdünnt und entsorgt werden.

GC-MS-Analysen ergaben einen Restgehalt an Kohlewasserstoffen in der überstehenden Restlösung von weniger als 0.05 mg/l. Dieser Wert ist wesentlich geringer als beispielsweise der schweizerische Grenzwert von 10 mg/l Kohlenwasserstoffe für Einleitungswasser in stehende Gewässer. Die Einleitung der Restlösung z.B. ins Meer ist also unbedenklich.

Für die Behandlung von Verschmutzungen mit schwererem Rohöl hat es sich als vorteilhaft erwiesen die Menge an Adsorptionsmittel um bis zu 120% zu erhöhen um das schwere Öl zu binden und zum Absinken zu bringen.

### D. Anwendungsbeispiel 4

Gemäss einer weiteren bevorzugten Ausführungsform der erfindungsgemässen Vorlösung ist der Wassergehalt auf 92 Vol.% erhöht. Die Vorlösung gemäss Beispiel 4 umfasst:
1 Vol.% Rhizinusöl-PEG 18-Dioleat,
1 Vol.% Maiskeimöl
6 Vol.% Ethanol und
92 Vol.% Wasser.

12 Liter der Vorlösung 4 werden vor Ort mit 138 Litern Wasser zu 150 Litern gebrauchsfertiger Reinigungslösung 4 verdünnt und zum Beispiel auf einen Quadratmeter kontaminierten Boden ausgebracht, der mit einem Kilogramm Rohöl kontaminiert ist.

Zusammenfassend lässt sich festhalten, dass die erfindungsgemässen Konzentrate zwischen 3 und 53 Vol. %, vorzugsweise 9 bis 17 Vol. %, und besonders bevorzugt 12.5 Vol. % Emulgator, zwischen 3 und 53 Vol. %, vorzugsweise 9 bis 17 Vol. %, und besonders bevorzugt 12.5 Vol. %, pflanzliches Öl und zwischen 28 und 94 Vol. %, vorzugsweise 75 Vol. %, Lösungsvermittler umfassen, wobei die Summe der einzelnen Teile jeweils 100% ergibt.

Die vorgängig beschriebenen erfindungsgemässen Konzentrate sind nur als mögliche Beispiele zu verstehen. Einem Fachmann ist es ohne grösseren Aufwand möglich, die Bestandteile eines erfindungsgemässen Konzentrats sowie die jeweiligen Anteile und Verdünnungsgrade zu variieren und zu optimieren, um weitere Varianten von erfindungsgemässen Konzentraten zu erhalten.

### F. Adsorptionsmittel

Die in bestimmten Ausführungsvarianten des erfindungsgemässen Reinigungsverfahren verwendete Zusammensetzung, vorgängig pulverförmiges Adsorptionsmittel genannt, umfasst vorteilhafterweise Partikel deren Grösse vorzugsweise zwischen 80 bis 600 Mikrometer liegt. Zumindest sollten mehr als 50 % der Zusammensetzung in Pulverform unterhalb 350 Mikrometer und besonders bevorzugt 100 % der Partikel im Bereich unter 350 Mikrometer liegen. Bei der pulverförmigen Zusammensetzung gemäss der Erfindung handelt es sich um ein trockenes, riesel- und/oder fliessfähiges Feststoffgemisch, welches eine Zusammensetzung von natürlichen mineralischen Rohstoffen umfasst, die in natürlicher Umgebung als Feststoffe vorkommen. Diese Rohstoffe werden in Primär- oder Sekundärlagerstätten (Steinbrüche, Steingruben oder sonstige Abbaustätten von mineralischen Rohstoffen) abgebaut. Sie können auch im Recyclingverfahren aus zertifiziert nicht-kontaminierten natürlichen mineralischen Rohstoffen gewonnen werden. Vorzugsweise werden die natürlichen mineralischen Rohstoffe weder thermisch noch chemisch vor- oder nachbehandelt.

Die natürlichen mineralischen Rohstoffe werden zur Herstellung der erfindungsgemässen Zusammensetzungen lediglich auf die für die Erfindung effizient wirkende notwendige Korngrösse heruntergebrochen bzw, gemahlen und miteinander gemischt. Damit resultiert für die Zusammensetzungen eine Gesamtkornoberfläche, an welche sich die die Verschmutzung bewirkenden Kohlenwasserstoffe, zum Beispiel das Rohöl mengenmässig optimal adhäsiv ansetzt (Monomolekularebene).

Geeignete pulverförmige Adsorptionsmittels setzen sich beispielsweise aus
40% Quarzsand (SiO₂)
40 % Granitmehl
15 % Kieselkalkmehl
5 % CaCO₃
oder
20% Quarzsand (SiO₂)
40 % Granitmehl
20 % Kieselkalkmehl
20 % CaCO₃ vorzugsweise als Marmormehl
zusammen, wobei in weiteren Ausführungsformen Kieselkalkmehl zumindest teilweise durch Ton, insbesondere durch Ziegel- oder Ziegeleitone, ersetzt sind.

Es hat sich als vorteilhaft erwiesen etwa 6 bis 10 kg, vorzugsweise 8 kg des pulverförmigen Adsorptionsmittels pro Kilogramm zu entfernendem Öl einzusetzen. Die genaue Zusammensetzung des Adsorptionsmittels in Pulverform und die Korngrösse der Bestandteile, wird vorzugsweise an die Beschaffenheit des zu entfernenden Öls angepasst.

Fliessfähige pulverförmige Zusammensetzungen gemäss bevorzugter Ausführungsformen der vorliegenden Erfindung sind in der folgenden Tabelle mit weiteren Merkmalen und bevorzugten Bereichen, in der Tabelle Bandbreiten genannt, offenbart:

| Rohstoff (Gestein/Mineral) | Chem. Zusammensetzung (Formel) | Bandbreiten Mengen (Gew-%) | Optimale Mengen (Gew-%) | Bandbreite Korngrössen (µm) |
|---|---|---|---|---|
| Kieselkalk | | 5 - 35% | 20%(+/-2.5%) | 80 -100 µm |
| *Bestandteilen:* | | | | |
| Quarz: | SiO₂ | | 42% (+/- 2.5%) | |
| Kalzium: | CaCO₃ | | 46% (+/- 2.5%) | |
| Dolomit: | Ca,Mg (CO₃)₂ | | 1% (+/- 2.5%) | |
| Glaukonit: | (K,Na)(Fe,Al,Mg)₂ (OH)₂(Si,Al)₄O₁₀ | | 1%(+/-2,5%) | |
| Ton: | (Na,Ca)(Al,Mg)₂ Si₄O₁₀(OH)₂4H₂O | | 5% (+/- 2.5%) | |
| (Montmorillonit) | | | | |
| Pyrit / Eisen: | FeS₂ / Fe₂O₃ | | 1% (+/- 2,5%) | |
| Organische Stoffe: | (CₓH_{y})-Komplexe | | 1% (+/- 2,5%) | |
| Div. Mineralien: | (Silikate) | | 3% (+/- 2.5%) | |
| | | | | |
| Quarz | | 5 - 35% | 20% (+/- 2.5%) | 100 -160 µm |
| *Bestandteile:* | | | | |
| Quarz: | SiO₂ | | 100% | |
| | | | | |
| Kalk | | 5 - 35% | 20% (+/- 2.5%) | 200 - 300 µm |
| *Bestandteile:* | | | | |
| Kalzium: | cacO₃ | | 100% | |
| | | | | |
| Granit | | 20 - 60% | 40% (+/- 2.5%) | 150 - 350µm |
| *Bestandteile;* | | | | |
| Quarz: | SiO₂ | | 35% (+/- 2.5%) | |
| K-Feldspar: | K(AlSi₃O₈) | | 29% (+/- 2.5%) | |
| Na-Feldspat: | Na(AlSi₃O₈) | | 29% (+/- 2.5%) | |
| Glimmer: | (K,AlₓMg_{y})(F,OH)₂ (AlSi₃O₁₀) | | 4% (+/- 2.5%) | |
| Hornblende: | Ca₂(Fe,Mg)₄ Al(Si₇Al)O₂₂ (OH,F)₂ | | 3% (+/- 2.5%) | |

Die vorgenannten, natürlichen mineralischen Bestandteile können, wie vorgängig bereits teilweise beschrieben wurde, durch gleiche mineralische Bestandteilen anderer natürlicher Rohstoffe ganz oder teilweise ersetzt werden oder aus gleichen natürlichen mineralischen Bestandteilen anderer Herkunft zusammengefügt werden.

Es hat sich gezeigt, dass durch die Korngrössenfraktionierung der einzelnen natürlichen mineralischen Rohstoffe die bei den erfindungsgemässen Zusammensetzungen zum Einsatz kommen und der Mischung dieser ein für die Erfindung optimales Schüttgewicht erreicht werden kann, welches das umweltverschmutzende Rohöl im Anschluss an den Adhäsionsprozess im Wasser (Süsswasser und Salzwasser) zum Sinken bringt.

| Rohstoff | spez. Gewicht | Schüttgewicht |
|---|---|---|
| | | (resultierend aus der Korngrössenfraktionierung) |
| Kieselkalk | 2.67 | 0.90 |
| Quarz | 2.65 | 0.90 |
| Kalk | 2.50 | 0.84 |
| Granit | 2.70 | 0.91 |
| Ø | 2.64 | 0.89 |

Für den Adhäsionsprozess hat sich ein durchschnittliches spezifisches Gewicht der erfindungsgemässen Zusammensetzung von 2.64 als vorteilhaft erwiesen.

Vorzugsweise werden 6 bis 10 Kilogramm, besonders bevorzugt 8 Kilogramm, von der erfindungsgemässen Zusammensetzung pro 1 Kilogramm Rohölverschmutzung eingesetzt.

Es versteht sich, dass die pulverförmigen Zusammensetzungen gegebenenfalls für den jeweiligen Anwendungszweck und unter Berücksichtigung der Beschaffenheit des zu entfernenden Öls anders zusammengestellt werden kann.

## Patentansprüche

1. Konzentrat zur Herstellung einer Reinigungslösung zur Behandlung von ölkontaminiertem Erdreich und zur Reinigung von ölverschmutzten Oberflächen, umfassend
(i) 3 - 53 Vol.% eines Emulgators; wobei der Emulgator ein nicht-ionisches Tensid mit einem HLB-Wert zwischen 7 und 8 ist.
(ii) 3-53 Vol.% eines pflanzlichen Öls; und
(iii) 28 - 94 Vol.% eines Lösungsvermittlers,
wobei der Lösungsvermittler nicht Wasser ist und
die Summe der einzelnen Teile 100% ergibt.

2. Konzentrat nach Anspruch 1, **dadurch gekennzeichnet, dass** der Emulgator ein nicht-ionisches Tensid mit einem HLB-Wert von 7.5 ist.

3. Konzentrat nach einem der oben genannten Ansprüche, **dadurch gekennzeichnet, dass** der Emulgator ausgewählt ist aus einer Gruppe bestehend aus, Polyethylenglykolen, Rhizinusöl-Polyethylenglykol-Dioleat, und Gemischen davon,

4. Konzentrat nach Anspruch 3, **dadurch gekennzeichnet, dass** der Emulgator PEG-18-Rhizinusöl-Dioleat ist.

5. Konzentrat nach einem der oben genannten Ansprüche, **dadurch gekennzeichnet, dass** das Konzentrat 9 bis 17 Vol%, vorzugsweise 12.5 Vol%, Emulgator enthält.

6. Konzentrat nach einem der oben genannten Ansprüche, **dadurch gekennzeichnet, dass** das pflanzliche Öl bei Temperaturen über 5°C flüssig ist

7. Konzentrat nach Anspruch 6, **dadurch gekennzeichnet, dass** das pflanzliche Öl ausgewählt ist aus einer Gruppe bestehend aus Weizenkeimöl, Maiskeimöl und Gemischen davon.

8. Konzentrat nach einem der oben genannten Ansprüche, **dadurch gekennzeichnet, dass** das Konzentrat 9 bis 17 Vol.%, vorzugsweise 12.5 Vol.%, pflanzliches Öl enthält.

9. Konzentrat nach einem der oben genannten Ansprüche, **dadurch gekennzeichnet, dass** der Lösungsvermittler ausgewählt ist aus einer Gruppe bestehend aus Ethanol, Isopropanol, Glykolether und Gemischen davon.

10. Konzentrat nach einem der oben genannten Ansprüche, **dadurch gekennzeichnet, dass** es
(i) 12.5 Vol. % eines Emulgators;
(ii) 12.5 Vol. % eines pflanzlichen Öls; und
(iii) 75 Vol. % eines Lösungsvermittlers,
umfasst, wobei die Summe der einzelnen Teile 100% ergibt.

11. Reinigungslösung zur Behandlung von ölkontaminiertem Erdreich und zur Reinigung von ölverschmutzten Oberflächen, umfassend eine wässrige Lösung mit 0.1 bis 1.5 Vol%, vorzugsweise 0.16 bis 0.2 Vol. %, Konzentrat nach einem der Ansprüche 1 bis 10.

12. Vorlösung zur Herstellung einer Reinigungslösung nach Anspruch 11, **dadurch gekennzeichnet, dass** ein Konzentrat nach einem der Ansprüche 1 bis 10 mit dem 2- bis 2.5 fachen, vorzugsweise dem 2.125 fachen Volumen Wasser verdünnt, vorzugsweise emulgiert wird.

13. Verfahren zur Behandlung von ölkontaminierten Oberflächen, insbesondere Tanks, Wände, Felsen und/oder Klippen, **dadurch gekennzeichnet, dass** die Oberfläche durch Abwaschen mit einer Reinigungslösung nach Anspruch 12 vom Öl befreit wird, wobei für jedes Kilogramm Öl, mit welchem die Oberfläche verschmutzt ist, 120 bis 200 Liter, vorzugsweise 150 Liter, der Reinigungslösung verwendet werden.

14. Verfahren nach Anspruch 12 oder 13, **dadurch gekennzeichnet, dass** die verbrauchte Reinigungslösung aufgefangen wird, und der Reinigungslösung ein pulverförmiges Adsorptionsmittel zugefügt wird, welches das in der Reinigungslösung emulgierte Öl adsorbiert.

15. Verfahren nach Anspruch 14, **dadurch gekennzeichnet, dass** das pulverförmige Adsorptionsmittel 5-35 Gew. % Quarzsand, 20-60 Gew. % Granitmehl und 10-70 Gew. % ausgewählt aus der Gruppe: Kieselkalkmehl, Kalk oder Marmormehl oder Gemischen davon umfasst.

16. Verfahren nach Anspruch 15, **dadurch gekennzeichnet, dass** das pulverförmige Adsorptionsmittel 40 Gew. % Siliciumkarbid, 40 Gew. % Granitmehl, 15 Gew. % Kieselkalkmehl und 5 Gew. % Kalk oder 20 Gew. % Quarzsand, 40 Gew. % Granitmehl, 20 Gew. % Kieselkalkmehl und 20 Gew. % Kalk vorzugsweise in Form von Marmormehl umfasst.

17. Verfahren nach Anspruch 15, **dadurch gekennzeichnet, dass** die Grösse der Partikel des pulverförmigen Adsorptionsmittels zwischen 80 bis 600 Mikrometer liegt, und vorzugsweise mehr als 50 % der Partikel eine Grösse von weniger als 350 Mikrometer aufweisen.

18. Set zur Reinigung von ölverschmutzten Oberflächen, insbesondere von Tanks, bestehend aus einem Konzentrat nach einem der Ansprüche 1 bis 10, und einem pulverförmigem Adsorptionsmittel, wobei mit einer aus dem Konzentrat durch Verdünnung hergestellten wässrigen Lösung eine ölverschmutzte Oberfläche reinigbar ist, und wobei mit dem pulverförmigem Adsorptionsmittel in der Reinigungslösung emulgiertes Öl adsorbierbar ist

19. Set nach Anspruch 18, **dadurch gekennzeichnet, dass** das pulverförmige Adsorptionsmittel 5-35 Gew. % Quarzsand, 20-60 Gew. % Granitmehl und 10-70 Gew. % ausgewählt aus der Gruppe: Kieselkalkmehl, Kalk oder Marmormehl oder Gemischen davon umfasst.

## Claims

1. A concentrate for manufacturing a cleaning solution for treating oil-contaminated soil and for cleaning oil-contaminated surfaces, comprising
(i) 3 - 53 % by volume of an emulsifier; whereas the emulsifier is a non-ionic tenside with an HLB-value between 7 and 8
(ii) 3 - 53 % by volume of a vegetable oil; and
(iii) 28 - 94 % by volume of a solubilizer, whereas the solubilizer is not water and wherein the sum of the individual parts results in 100%.

2. The concentrate according to claim 1, **characterized in that** the emulsifier is a non-ionic tenside with an HLB-value of 7.5.

3. The concentrate according to one of the above-mentioned claims, **characterized in that** the emulsifier is selected from a group consisting of polyethylene-glycols, castor oil polyethylene-glycol dioleate, and mixtures thereof.

4. The concentrate according to claim 3, **characterized in that** the emulsifier is PEG 18 castor oil dioleate.

5. The concentrate according to one of the above-mentioned claims, **characterized in that** the concentrate contains 9 to 17 % by volume, preferably 12.5% by volume of emulsifier.

6. The concentrate according to one of the above-mentioned claims, **characterized in that** the vegetable oil is fluid at temperatures above 5°C.

7. The concentrate according to claim 6, **characterized in that** the vegetable oil is selected from a group consisting of wheat germ oil, maize germ oil, and mixtures thereof.

8. The concentrate according to one of the above-mentioned claims, **characterized in that** the concentrate contains 9 to 17% by volume, preferably 12.5% by volume of vegetable oil.

9. The concentrate according to one of the above-mentioned claims, **characterized in that** the solubilizer is selected from a group consisting of ethanol, isopropanol, glycol ether and mixtures thereof.

10. The concentrate according to one of the above-mentioned claims, **characterized in that** it comprises
(i) 12.5 % by volume of an emulsifier;
(ii) 12.5 % by volume of a vegetable oil, and
(iii) 75 % by volume of a solubilizer,
wherein the sum of the individual parts results in 100%.

11. Cleaning solution for treating oil-contaminated soil and for cleaning oil-contaminated surfaces, comprising an aqueous solution with 0.1 to 1.5 % by volume, preferably 0.16 to 0.2% by volume of a concentrate according to one of the claims 1 to 10.

12. Pre-solution for manufacturing a cleaning solution according to claim 11, **characterized in that** a concentrate according to one of the claims 1 to 10 is diluted, preferably emulsified with 2-fold to 2.5-fold, preferably 2.125-fold the volume of water.

13. Method for treating oil-contaminated surfaces, in particular tanks, walls, rocks and/or cliffs, **characterized in that** the surface is freed of oil by way of washing off with a cleaning solution according to claim 12, wherein 120 to 200 liters, preferably 150 liters of the cleaning solution is used for each kilogram of oil with which the surface is contaminated.

14. Method according to claim 12 or 13, **characterized in that** the consumed cleaning solution is collected, and a powder-like adsorbing agent is added to the cleaning solution, which adsorbs the oil emulsified in the cleaning solution.

15. The method according to claim 14, **characterized in that** the powder-like adsorbing agent comprises 5-35 % by weight of silica sand, 20-60 % by weight of granite meal and 10-70 % by weight selected from the group: meal of siliceous limestone, lime, marble meal, or mixtures thereof.

16. The method according to claim 15, **characterized in that** the powder-like adsorbing agent comprises 40 % by weight of silicon carbide, 40 % by weight of granite meal, 15 % by weight of fine-grained powder of siliceous limestone, and 5% by weight of lime, or 20 % by weight of silica sand, 40 % by weight of granite meal, 20 % by weight of meal of siliceous limestone and 20 % by weight of lime, preferably in the form of marble meal.

17. The method according to claim 15, **characterized in that** the size of the particles of the powder-like adsorbing agent lies between 80 to 600 micrometers, and preferably more than 50 % of the particles have a size of less than 350 micrometers.

18. Set for cleaning oil-contaminated surfaces, in particular of tanks, consisting of a concentrate according to one of the claims 1 to 10, and of a powder-like adsorbing agent, wherein an oil-contaminated surface may be cleaned with an aqueous solution manufactured from the concentrate by way of dilution, and wherein emulsified oil in the cleaning solution may be adsorbed with the powder-like adsorbing agent.

19. Set according to claim 18, **characterized in that** the powder-like adsorbing agent comprises 5-35 % by weight of silica sand, 20-60 % by weight of granite meal and 10-70 % by weight selected from the group: meal of siliceous limestone, lime, marble meal, or mixtures thereof.

## Revendications

1. Concentré pour la préparation d'une solution de nettoyage destinée au traitement de terrain contaminé par des huiles et au nettoyage de surfaces souillées par des huiles, comprenant
(i) 3 - 53 % en volume d'un émulsifiant, l'émulsifiant étant un tensioactif non ionique ayant une valeur HLB (rapport hydrophile-lipophile) comprise entre 7 et 8 ;
(ii) 3 - 53 % en volume d'une huile végétale ; et
(iii) 28 - 94 % en volume d'un tiers-solvant,
le tiers-solvant n'étant pas l'eau et
la somme des parties individuelles étant égale à 100 %.

2. Concentré selon la revendication 1, **caractérisé en ce que** l'émulsifiant est un tensioactif non ionique ayant une valeur HLB de 7,5.

3. Concentré selon l'une quelconque des revendications précédentes, **caractérisé en ce que** l'émulsifiant est choisi dans le groupe constitué par les polyéthylèneglycols, le dioléate de polyéthylèneglycol-huile de ricin, et des mélanges de ceux-ci.

4. Concentré selon la revendication 3, **caractérisé en ce que** l'émulsifiant est le diolate de PEG 18-huile de ricin.

5. Concentré selon l'une quelconque des revendications précédentes, **caractérisé en ce que** le concentré contient de 9 à 17 % en volume, de préférence 12,5 % en volume, d'émulsifiant.

6. Concentré selon l'une quelconque des revendications précédentes, **caractérisé en ce que** l'huile végétale est liquide à des températures supérieures à 5°C.

7. Concentré selon la revendication 6, **caractérisé en ce que** l'huile végétale est choisie dans un groupe constitué par l'huile de germes de blé, l'huile de germes de maïs et des mélanges de celles-ci.

8. Concentré selon l'une quelconque des revendications précédentes, **caractérisé en ce que** le concentré contient de 9 à 17 % en volume, de préférence 12,5 % en volume, d'huile végétale.

9. Concentré selon l'une quelconque des revendications précédentes, **caractérisé en ce que** le tiers-solvant est choisi dans un groupe constitué par l'éthanol, l'isopropanol, les éthers de glycol et des mélanges de ceux-ci.

10. Concentré selon l'une quelconque des revendications précédentes, **caractérisé en ce qu'**il comprend
(i) 12,5 % en volume d'un émulsifiant ;
(ii) 12,5 % en volume d'une huile végétale ; et
(iii) 75 % en volume d'un tiers-solvant,
la somme des parties individuelles étant égale à 100 %.

11. Solution de nettoyage pour le traitement de terrain contaminé par des huiles et pour le nettoyage de surfaces souillées par des huiles, comprenant une solution aqueuse de 0,1 à 1,5 % en volume, de préférence de 0,16 à 0,2 % en volume, de concentré selon l'une quelconque des revendications 1 à 10.

12. Solution préliminaire pour la préparation d'une solution de nettoyage selon la revendication 11, **caractérisée en ce qu'**un concentré selon l'une quelconque des revendications 1 à 10 est dilué, de préférence émulsionné, avec 2 à 2,5 fois, de préférence 2,125 fois son volume d'eau.

13. Procédé pour le traitement de surfaces, en particulier de citernes, parois, rochers et/ou écueils, contaminées par des huiles, **caractérisé en ce qu'**on libère de l'huile la surface par élimination par lavage avec une solution de nettoyage selon la revendication 12, en utilisant pour chaque kilogramme d'huile par laquelle la surface est souillée, 120 à 200 litres, de préférence 150 litres, de la solution de nettoyage.

14. Procédé selon la revendication 12 ou 13, **caractérisé en ce qu'**on applique la solution de nettoyage utilisée, et on ajoute à la solution de nettoyage un adsorbant pulvérulent, qui adsorbe l'huile émulsionnée dans la solution de nettoyage.

15. Procédé selon la revendication 14, **caractérisé en ce que** l'adsorbant pulvérulent contient 5-35 % en poids de sable quartzeux, 20-60 % en poids de poudre de granite et 10-70 % en poids choisis dans le groupe : poudre de calcaire gréseux, chaux ou poudre de marbre ou des mélanges de ceux-ci.

16. Procédé selon la revendication 15, **caractérisé en ce que** l'adsorbant pulvérulent comprend 40 % en poids de carbure de silicium, 40 % en poids de poudre de granite, 15 % en poids de poudre de calcaire gréseux et 5 % de chaux ou 20 % en poids de sable quartzeux, 40 % en poids de poudre de granite, 20 % en poids de poudre de calcaire gréseux et 20 % de chaux de préférence sous forme de poudre de marbre.

17. Procédé selon la revendication 15, **caractérisé en ce que** la taille des particules de l'adsorbant pulvérulent est comprise entre 80 et 600 µm, et de préférence plus de 50 % des particules ont une taille de moins de 350 µm.

18. Ensemble pour le nettoyage de surfaces souillées par des huiles, en particulier de citernes, constitué d'un concentré selon l'une quelconque des revendications 1 à 10, et d'un adsorbant pulvérulent, une surface souillée par des huiles pouvant être nettoyée avec une solution aqueuse préparée par dilution à partir du concentré, et l'huile émulsionnée dans la solution de nettoyage pouvant être adsorbée par l'adsorbant pulvérulent.

19. Ensemble selon la revendication 18, **caractérisé en ce que** l'adsorbant pulvérulent comprend 5-35 % en poids de sable quartzeux, 20-60 % en poids de poudre de granite et 10-70 % en poids choisis dans le groupe : poudre de calcaire gréseux, chaux ou poudre de marbre ou des mélanges de ceux-ci.
